Europäisches Patentamt

European Patent Office

Office européen des brevets

(11) Publication number: **0 086 086**
A2

# (12) EUROPEAN PATENT APPLICATION

(21) Application number: **83300543.2**

(22) Date of filing: **03.02.83**

(51) Int. Cl.³: **E 21 B 10/48**
**B 23 P 15/28, B 28 D 1/12**
**B 24 D 7/06**
**//B22F7/06**

(30) Priority: **05.02.82 ZA 820731**

(43) Date of publication of application:
**17.08.83 Bulletin 83/33**

(84) Designated Contracting States:
**DE FR GB SE**

(71) Applicant: **BOART INTERNATIONAL LIMITED**
**Boart Place Oxford Park**
**Sandton Transvaal(ZA)**

(72) Inventor: **Franks, Cedric Peter Leslie**
**258 Johannes Street**
**Fairlands Randburg Transvaal(ZA)**

(74) Representative: **White, Malcolm Frank et al,**
**Marks & Clerk Alpha Tower Suffolk Street Queensway**
**Birmingham B1 1TT(GB)**

(54) Cutting device, a tool including a cutting device and a method of making a cutting device.

(57) A coring bit comprises a number of cutting devices separated by waterways. On the cutting faces of the devices are small synthetic grit particles arranged spaced apart from one another along a plurality of spaced radial lines transverse to the cutting direction of the cutting devices. The diamond grit particles are in laterally overlapping dispositions along the cutting direction. The particles have a maximum face coverage percentage of 40% and a maximum size of 25 US mesh. The particles may be arranged in a mono-layer, in a plurality of layers or on a plurality of steps in the cutting direction.

FIG 1

1.

### "CUTTING DEVICE, A TOOL INCLUDING A CUTTING
### DEVICE AND A METHOD OF MAKING A CUTTING DEVICE"

## FIELD OF THE INVENTION

This invention relates to cutting devices of the type for cutting or abrasively removing material from a body and having cutting elements set in a body of supporting or matrix material. The invention also relates to a method of making such cutting devices and further to tools including such cutting devices.

The invention is concerned with such cutting devices in which the cutting elements are typically natural and synthetic diamonds, cubic boron nitride and the like, though the invention also has application to other cutting elements such as tungsten carbide, silicon carbide, aluminium oxide and the like. Typically the matrix material is copper, copper alloys, tungsten, tungsten carbide and combinations thereof while appropriate resins may also be used.

The invention is concerned with such cutting devices for working metal, concrete, glass, ceramics, plastics, rock, (particularly hard rock), etc by cutting, milling, drilling, sawing, coring, reaming and the like.

## DEFINITIONS (TERMS OF ART)

In the description that follows, the term "maximum particle diameter" (or its abbreviation MPD) is used. This is a term used in the art of grit processing and refers to the maximum size or cross-section of a particle that will pass through a standard screen having a particular mesh opening size. The term "diameter" is used in the art even though the particles are not necessarily

2.

perfect spheres, because such particles are usually not unduly elongate and approximate in general to spheres.

In this specification the term "face area" of a particle is also used. The face area of a particular particle whose shape is known can, of course, always be determined or measured. However with the multiplicity of particles of different shape that are normally present plus the fact that such particles may be cleaved to have more than one facet of any of a large number of shapes depending on the particle crystal structure it is not possible, in practice, to define accurately the face area of a plurality of particles either as set or after wear. Accordingly an approximation is used, based on the maximum diameter (or the linear cross-section) of the exposed face of a particle at a particular spacing from the edge of a nominal spherical shape. In particular the "maximum face area" of a plurality of particles of cutting elements is defined to mean the square of the maximum particle diameter, as defined previously, times the number of particles visible on a face of a cutting device. This definition in effect assumes that the particles are cubes, the maximum length of side of each of which is the maximum particle diameter, and that the "visible" face area will have a maximum emerging from the assumption that each of the particles is of maximum size to pass through a particular standard screen. The actual face area will, of course, be smaller than the "maximum face area" since at most only a few particles will have the "maximum particle diameter".

3.

The term "maximum face coverage percentage" (sometimes referred to as "MFCP" later) is defined to mean the proportion of a cutting face covered by cutting elements of "maximum face area" as defined above expressed as a percentage.

Further definitions will be given below.

SUMMARY OF THE INVENTION:

According to one aspect of the invention there is provided a cutting device including cutting elements set in matrix material, having a cutting face and an intended cutting direction across the face, the cutting elements being arranged spaced apart from one another along a plurality of lines transverse to the cutting direction with the lines extending across the width of the cutting face and with the lines being spaced from one another along the cutting direction, the cutting elements of the lines in combination being in laterally overlapping dispositions along the cutting direction, and the cutting elements preferably having a maximum face coverage percentage of 40% and a maximum size of 25 US mesh. The lateral overlapping disposition of the cutting elements is such that on movement of the cutting device across a workpiece the entire area of the workpiece exposed to the cutting device is subject to being cut by the cutting elements.

4.

The maximum face coverage percentage is conveniently between 25%
and 1%, preferably between 20% and 2% and optimally between 18%
and 2.5%.

The cutting elements may be smaller than 25 US mesh, conveniently
lying in the range 25 to 40 US mesh.

The lateral overlap of cutting elements may conveniently be between 0.1 and 0.9 times the maximum particle diameter (MPD), conveniently between 0.2 and 0.5 times MPD, preferably between 0.25
and 0.4 times MPD and optimally between 0.3 and 0.35 times MPD.

In practice the cutting elements do the work of removing material
from the workpiece with the amount of material removed being dependent on the size and protrusion of the particles, the load
normal to the cutting face and the total number of cutting elements. The practical criteria for determining the number and size
of the cutting elements are the power and speed of the machine
driving the cutting device and the load applied. Accordingly, for
any particular application the ratio of maximum face coverage
percentage (MFCP) to the cutting element size must be determined
empirically or analytically for either optimum values or maximum
ranges for a range of workpieces of different characteristics,
such as types of rock, ceramics, metals and so on.

5.

The lines in which the cutting elements are arranged may be straight lines or may be curved. Such lines may be substantially perpendicular to the cutting direction or may be at any suitable inclination transverse to the cutting direction. The lines may also be bent, e.g. into a chevron formation. Thus, for example, with a rotary coring bit the lines may be radial to the bit axis, be curved or straight and arranged in spiral dispositions with respect to the bit axis (a "snow plow" arrangement), in chevrons with the apex of the chevron facing or against the cutting direction and so on.

The cutting elements are preferably arranged in layers extending in a direction normal to the cutting face. Preferably the cutting elements in one layer overlap the cutting elements in an adjacent layer, with the amount of overlap being such that in the transition between layers, in use, the maximum face coverage percentage (MFCP) is less than 40%, conveniently less than 25%, preferably less than 18%, for the total number of cutting elements in the adjacent layers.

According to another aspect of the invention there is provided a cutting device including cutting elements set in matrix material, having a cutting face and having a cutting direction, the cutting elements being arranged spaced apart from one another along lines transverse to the cutting direction with the lines extending laterally across the width of the cutting face and with the lines being spaced from one another along the cutting direction, the cutting elements along the cutting direction of the lines being

6.

in laterally overlapping dispositions and the cutting elements being arranged in a three dimensional array in the matrix material with at least some of the lines being in layers parallel to and spaced from the cutting face and with the cutting elements in each layer being in laterally overlapping dispositions across the width of the cutting face.

There may be any convenient number of layers. Thus there may be between two and twelve layers, and preferably between three and six layers. At present it is believed that between four and six layers, inclusive, would be most convenient at least for rock drilling or coring applications in underground workings where a balance between the drilling component cost and length of hole being drilled or cored must be obtained.

According to a further aspect of the invention there is provided a cutting device including cutting elements set in matrix material, having a cutting face and having a cutting direction, the cutting elements being arranged spaced apart from one another along lines transverse to the cutting direction with the lines extending across the width of the cutting face and with the lines being spaced from one another along the cutting direction, the cutting elements along the cutting direction of the lines being in laterally overlapping dispositions and the cutting face comprising a plurality of parallel decks which extend transversely to the cutting direction and on each of which is set at least one pair of cutting elements.

7.

According to yet another aspect of the invention there is provided a cutting tool including at least one cutting device as described above.

Yet further according to the invention there is provided a cutting tool for working rock, concrete, ceramics and the like, comprising support means for a cutting device as described above and means to attach the support to a driving means for driving the tool to move relatively to a working area of a workpiece. The tool may be a drilling bit, a coring bit, a reamer, a reciprocating or a rotary saw and the like. With tools such as coring and drilling bits and saws the cutting face has a lateral edge portion or corner on at least one side thereof and the invention in this aspect provides that a region adjacent that corner is reinforced with additional lateral cutting elements. As discussed more fully below such lateral cutting elements may be "corner cutting elements" or "top spline cutting elements". Preferably these lateral cutting elements are slightly larger than the cutting elements on the cutting face intermediate the lateral edges. Preferably, on each of the side faces of the cutting device substantially normal to the cutting face further cutting elements are provided in lines. Such further cutting elements are hereinafter called "gauge cutting elements" since they maintain the thickness or dimensions of the formation being cut by the cutting tool. Preferably these gauge cutting elements are provided on ribs or splines extending outwardly from each side of the cutting device.

8.

Particularly where the cutting tool as described above is for working hard rock, the cutting elements preferably comprise grit, preferably diamond grit, of between 25 and 200 US mesh, preferably between 25 and 120 US mesh and conveniently between 18 and 60 US mesh. For example for a coring bit, the cutting elements on the cutting face intermediate the radially inner and outer lateral edges thereof may be 30/40 US mesh, preferably 30/35 US mesh; the corner cutting elements may be preferably slighly larger, for example 25/30 US mesh, though larger cutting elements, say up to 12 or 14 US mesh may also be used; and the gauge cutting elements preferably are of the same size as the cutting elements on the cutting face.

According to yet another aspect of the invention there is provided a method of making a cutting device comprising placing a housing having a surface formed with a desired array of holes on the surface of a body of discrete cutting elements;

-applying a vacuum to the interior of the housing to cause cutting elements to be drawn partially into each of the holes;

-removing the housing from the body of cutting elements;

-placing carrier means having a tacky adhesive on at least one side thereof in contact with the cutting elements to cause the cutting elements to adhere to the carrier means;

-removing the vacuum;

-placing the carrier means with adhered cutting elements in a die;

-pouring matrix material into the die; and

-hardening the matrix material.

9.

The hardening may be performed by densification of the matrix material and may be performed according to any of the methods known in the art for copper, copper alloys, tungsten and the like. For example hot pressing, sintering, and infiltration may be used depending on the nature of the matrix material.

The method of the invention may be extended in a number of ways to make a cutting device having a plurality of layers of cutting elements. In one way, the die is formed such that the base thereof is inclined in certain regions so that the cutting elements are located in the hardened matrix in a number of layers relative to the outermost cutting face. The inclination may be uniform or may be in a number of steps. The inclination will determine the amount of overlap between the particles in adjacent layers. In a second way a plurality of carrier means each with adhered cutting elements is formed, these carrier means are stacked in a die with a predetermined quantity of matrix material being inserted between adjacent carrier means, and the body so formed is then hardened. With this form of the method, the successive layers are preferably staggered along the cutting direction.

The carrier means may be of a material that volatilises when the matrix is densified. Suitable materials for this purpose include plastics sheet materials such as polyethylene, polypropylene and the like.

10.

Alternatively the carrier means may be of a material that will form part of the matrix itself after densification. For example copper, brass or bronze sheets, and in particular bronze shims, could be used for the carrier means so that if used in a suitable material which is densified by hot pressing the carrier sheet will become part of the matrix. Accordingly, for obtaining a desired spacing or overlap of cutting elements in multiple layers appropriate thickness strips of such carrier materials may be used.

Similar concepts as discussed in the two paragraphs immediately above may be used where the matrix material is resinous and the like, appropriate materials being used for the carrier means.

The surface formed with the array of holes may be formed by a special screen, though preferably it is a plate formed with an array of holes according to known photographic etching processes as in this way the desired array of lines and holes in a line can be formed. Also larger holes for relatively larger lateral cutting elements can be formed, if desired. This etched plate design also provides the designer with freedom to obtain the desired maximum face coverage percentage/cutting element size relationship.

Another aspect of the invention provides a housing as discussed above for use with the method described above. Yet another aspect of the invention provides a housing forming a closed chamber with a wall of the housing being formed with an array of holes and means to apply a vacuum to the interior of the housing.

11.
Examples of the invention are described below by way of example
with reference to the accompanying schematic drawings. In these
drawings usually not all of the cutting elements are shown.

BRIEF DESCRIPTION OF THE DRAWINGS.

Figure 1 is a perspective view of a coring bit of the invention;

Figure 2 are diagramatic views of twelve different layer arrangements of cutting devices of the invention, the various arrangements being identified by sub-scripts 1 to 12;

Figures 3a and 3b show, respectively, a detail of one pattern of
grit set in a many layer, single deck arcuate cutting device and
a schematic illustration of the grit pattern of successive layers
of grit particles in a direction normal to the cutting face;

Figures 4a and 4b show respectively another pattern of grit particles set in a many layer, single deck arcuate cutting device and
a schematic illustration of the grit pattern of successive layers
of grit particles in a direction normal to the cutting face;

Figures 5a to 5d show different variants of pattern in a many
layer cutting device of the invention, the illustrations being
developed sections along a plane normal to the cutting face and
parallel to the axial direction of movement of the cutting device
in use;

12.

Figure 6 is a plan view of a mono-layer six waterway coring bit according to the invention;

Figure 7 is a detail of Figure 6 showing the lateral overlapping disposition of certain particles;

Figure 8 is a plan view a detail of a portion of a multi-layer coring bit of the invention;

Figure 9 is a similar view of another multi-layer coring bit of the invention;

Figure 10 is a plan view of a non-coring bit of the invention;

Figure 11 is a side view, partially in section on line 11 - 11 of Figure 10;

Figure 12 is a transverse section through a die for making a coring bit of the invention;

Figure 13 is a perspective view of a device for obtaining a predetermined array of grit particles;

Figure 14 is a section through a part of a die for forming a coring bit according to the invention; and

Figure 15 is a schematic view showing the use of shims as carrier means in a method of forming a coring bit.

13.

"negative cutting direction" means the direction opposite to the
cutting direction.

"horizontal" means in a plane parallel to the cutting direction
and specifically in relation to a rotary bit, "horizontal"
means in a transverse plane;

"vertical" means normal to horizontal;

"splines" mean raised, generally longitudinally extending ribs
formed on the sides of the bit beside the cutting face.

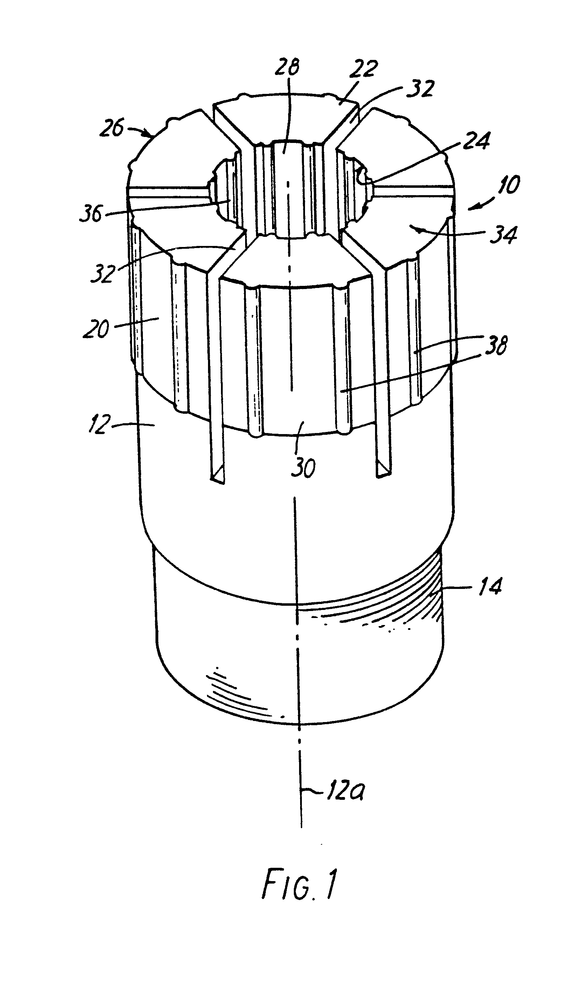

GENERAL ARRANGEMENT OF A CORING BIT (Figure 1)

A typical coring bit 10 of the invention will now be described in
order to provide a background for the various details of the invention will be described below. All the remaining illustrated
coring bits or parts thereof have the features embodied in bit 10
except where differences are apparant from the illustration or
description thereof.

The coring bit 10 comprises a hollow cylindrical body 12, the
rear end 14 of which is of reduced diameter and has external
threads thereon (or internal threads if desired).

The forward end of the body 12 carries an annular cutting portion
20 comprising matrix material and cutting elements arranged
thereon as will be described. The front annular face 22 of the
cutting portion 20 lies in a transverse plane which is normal to
the axis 12a of the body 12. This face 22 is the cutting face
which is bound by inner and outer circular corners 24 and 26 at
the juncture of the face 22 with the inner and outer cylindrical
walls 28 and 30 of the cutting portion 20.

14.

## DEFINITIONS (Embodiments of the Invention).

In the description which follows - which refers to rotary mining bits having an annular front face divided by waterways - the following terms used herein have the meanings set out below:-

"cutting device" means the part of the annular front face between an adjacent pair of waterways;

"deck" means a continuous surface forming or being one of a number of such surfaces forming the front face of a cutting device;

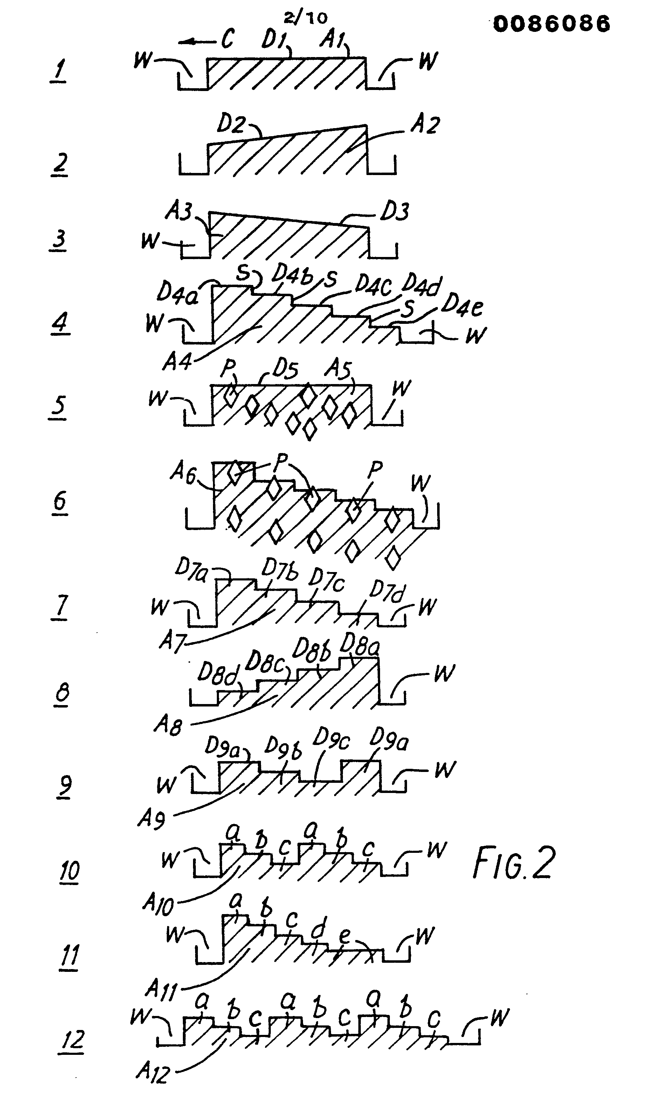

"mono-layer" means having a single deck in the transverse plane and carrying a single layer of particles thereon as exemplified by device $A_1$ in Figure 2;

"multi-layer" means having a plurality of decks as exemplified by devices $A_4$ and $A_7$ to $A_{12}$ in Figure 2;

"many layer" means having a plurality of layers of particles on and below the surface of the or each deck as exemplified by devices $A_5$ and $A_6$ in Figure 2;

"x:y face pattern (where "x" and "y" are integers)" means a pattern of rows of particles where "x" and "y" are the number of particles in adjacent rows, thus an "8:9 pattern pattern" means an arrangement wherein adjacent rows of particles contain eight and nine particles respectively;

"transverse plane" means a plane in the cutting direction of the device and specifically in relation to a rotary cutter such as a coring or non-coring bit, a plane normal to the axis of the bit;

A plurality of identical, equispaced, radially extending waterways 32 extend through the cutting portion 20 and adjacent parts of the body 12. These waterways 32 divide the cutting portion 20 into a plurality of identical arcuate cutting devices 34.

Longitudinally extending splines 36 and 38 are formed on the inner and outer cylindrical sides 28 and 30 of the cutting portion 20 respectively.

The cutting elements comprise synthetic diamond grit particles of a size in the range of 25 to 30 US mesh. These will be referred to as "particles" and occassionally as "stones" in the description of the embodiments. The cutting elements can comprise other particles as will be set out more fully below. The precise sizes may vary as will also be described more fully below.

The matrix material may be any suitable material depending on the intended application of the coring bit, such as hard or soft rock or concrete. A suitable bronze such as 80% copper and 20% tin or 90% copper and 10% tin may be used. Alternatively a "hard" material such as tungsten or tungsten carbide may be used in combination with a softer constituent such as bronze, copper and the like. As discussed more fully in relation to the manufacture of the bit, a combination matrix material may also be used. Such combination material may include tungsten or tungsten carbide particles or fine grit used with an infiltration binder.

For purposes of illustration, reference will be made to Figures 2 to 5 which are schematic drawings showing arrangements of decks and cutting particle arrangements.

## GENERAL ARRANGEMENTS OF DECKS (Figure 2)

In Figure 2 there are shown twelve cutting devices (numbered A in this figure) forming parts of coring bits and having typical deck arrangements, the various cutting devices being identified by the subscripts 1 to 12. The decks carry particles in various arrays as will be described below and are defined at their ends by waterways W. The cutting direction of the cutting devices is given by arrow C. Embodiments of the invention with certain of these deck arrangements are also described in more detail below.

Cutting device $A_1$ has a single continuous cutting face or deck $D_1$ which lies in a transverse plane. This is a 1 deck, mono-layer cutting device.

Cutting device $A_2$ has a single deck $D_2$ inclined to the transverse plane and rising in the reverse cutting direction. This is a negative inclined 1 deck cutting device.

Cutting device $A_3$ is similar to device $A_2$ save that it rises in the cutting direction. This is a positive inclined 1 deck cutting device.

Cutting device $A_4$ has five identical decks $D_{4a}$, $D_{4b}$, $D_{4c}$, $D_{4d}$ and $D_{4e}$ lying in equispaced transverse planes (in this specification, the upper deck is numbered with the suffix a and lower decks with alphabetically consecutive suffixes) and falling away in the negative cutting direction. There is a step S in the vertical plane between each deck D and hence at right angles thereto. This is a positive 5 deck multi-layer cutting device of an a, b, c, d, e design.

In all of cutting devices $A_2$ to $A_4$, there is only a single layer of particles surface set on each deck.

Cutting device $A_5$ is similar to device $A_1$ save that there are a number of layers of particles P, each layer being in a vertically spaced transverse plane. This is a 1 deck, many layer cutting device.

Cutting device $A_6$ is similar to device $A_4$ save that there are a number of layers of particles P, each layer being in a transverse plane. This is a 5 deck, multi/many layer cutting device of an a, b, c, d, e design.

The cutting devices $A_7$ to $A_{12}$ could all carry either a single layer of particles or a plurality of layers of particles. These devices are described as the former, but if the latter, their description would be altered by the addition of the descriptive word "many" as used in relation to cutting device $A_6$.

18.

Cutting device $A_7$ is a positive 4 deck multi-layer cutting device of a, b, c, d design.

Cutting device $A_8$ is a negative 4 deck multi-layer cutting device of d, c, b, a design.

Cutting device $A_9$ has four decks on three planes and is a positive 3 deck multi-layer cutting device of a, b, c, a design.

Cutting device $A_{10}$ is a positive double 3 deck multi-layer cutting device of 2x a, b, c design.

Cutting device $A_{11}$ has five decks of which the lowest is of double the size of the remaining decks. It is a positive 5 deck multi-layer cutting device of a, b, c, d, e, e design.

Cutting device $A_{12}$ has nine decks on three transverse planes and is a positive triple 3 deck multi-layer cutting device of 3x a, b, c design.

PARTICLE PATTERNS FOR MANY LAYER CUTTING ELEMENTS.
(Figures 3 and 4)

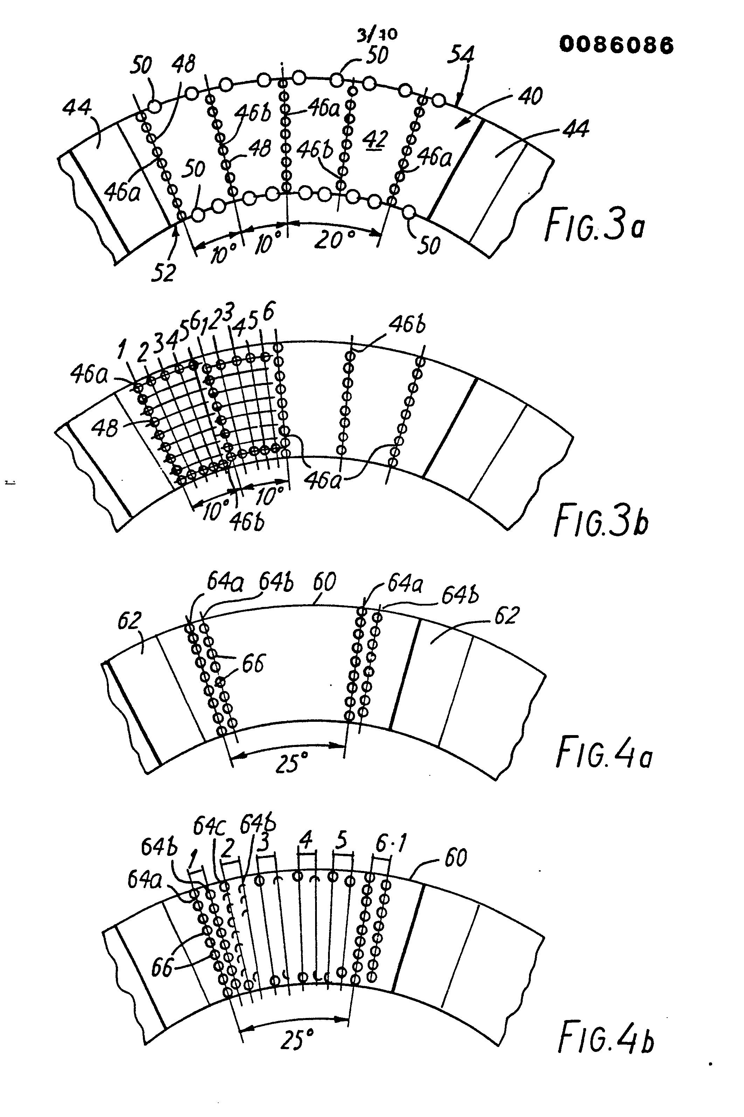

Figures 3a and 3b show schematically a detail of a 1-deck many (six) layer 8:9 face pattern cutting device 40 forming part of a coring bit. The cutting device 40 has a single cutting face or deck 42 which lies in a transverse plane between waterways 44.

19.

The deck 42 has surface set thereon five equispaced radial rows 46 of spaced particles 48, there being rows 46a each with nine particles, alternating with rows 46b each having eight particles. The end rows on each cutting device 40 are nine stone rows 46a. The particles of successive rows 46 are in a lateral overlapping disposition as will be described below.

The spacing between adjacent rows 46 in one layer is 10° with a 20° spacing between similar rows.

Corner or gauge stones 50 are provided on the radially inner and outer corner regions 52 and 54 between adjacent rows 46. These corner stones 50 are relatively larger than the other particles.

Figure 3b shows the six layers of spaced particles 48 (the layers being numbered 1 to 6) with the pattern of sequential layers being substantially identical and being radially offset by 2° and with the pattern effectively repeating itself after 10°.

Figures 4a and 4b show a 1-deck many (six) layer paired 8:9 face pattern cutting device 60 for a coring bit. In this arrangement, the cutting face device 60 which is located between waterways 62 carries four radial rows of 64 of spaced particles 66. These rows 64 are arranged in two closely adjacent pairs of rows 64a and 64b, with the rows 64a having nine particles per row and the rows 64b having eight particles and with the particles in laterally overlapping disposition. The two pairs of rows are separated by 25°. Figure 4b shows that there are six layers of particles 66

20.

in the device 60 with the pattern of sequential layers being radially offset sequentially by 5° and with the pattern repeating after six layers, i.e. after 25°. It will be noted that layers 2 to 5 contain only one pair of rows 64 of particles.

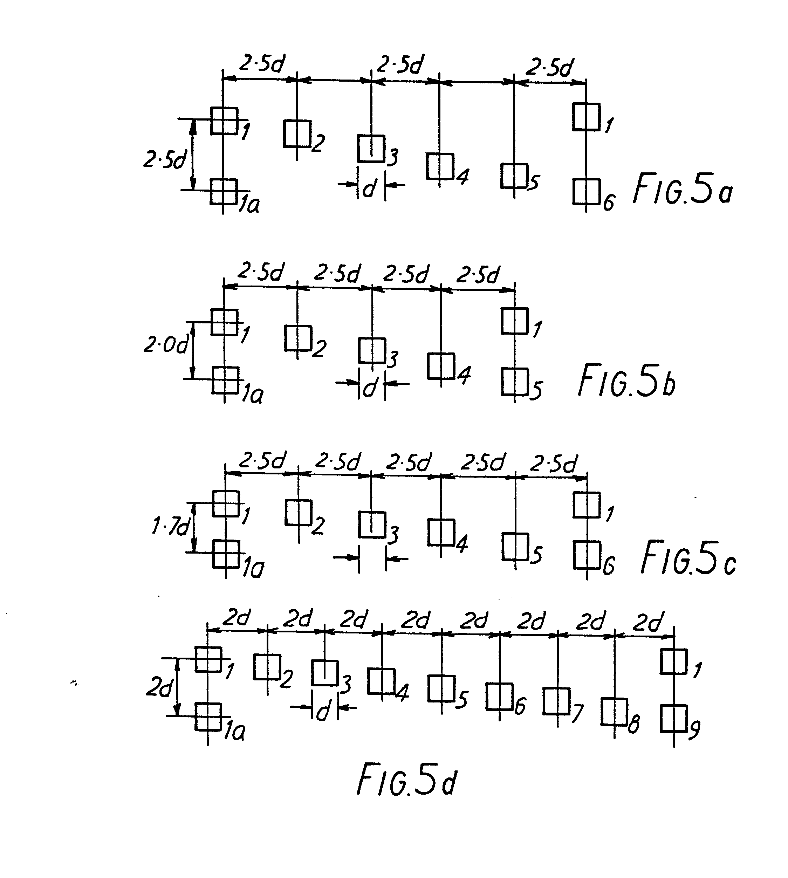

VERTICAL ARRANGEMENTS OF CUTTING ELEMENTS.(Figure 5)

Figures 5a to 5d show various arrangements of particles arranged in a many layer three dimensional array, the views being schematic longitudinal, developed sections along planes normal to the cutting face and parallel to the direction of movement of the cutting device in use. The particles, which are in rows running at right angles to the plane of the paper, are illustrated as being cuboidal. The rows of particles in the layers are numbered 1, 2 etc with the repeating layer numbered 1a.

Figure 5a shows a six layer construction i.e. the pattern repeats after six layers. There is a half particle overlap of the particles in successive layers. The horizontal spacing between particles is 2,5 times the maximum diameter of the particles (MPD). The vertical spacing between layers is 0,5 times MPD and the repeating layers are spaced by 2,5 times MPD.

Figure 5b shows a five layer construction with a half particle overlap between successive layers, the horizontal spacing being 2,5 times. The vertical spacing between layers is 0,5 times MPD and the repeating layers are spaced by 2,0 times MPD.

21.

Figure 5c shows another six layer construction with a two-thirds particle vertical overlap and a horizontal spacing of 2,5 times MPD. The vertical spacing between layers is 0,34 times MPD and the repeating layers are spaced by 1,7 times MPD.

Figure 5d shows a nine layer construction having a three-quarter particle overlap with a 2,0 MPD horizontal spacing between particles. The vertical spacing between layers is 0,25 times MPD and the repeating layers are spaced by 2,0 times MPD.

For rock drilling applications the vertical spacing between adjacent layers may, depending on the absolute grit size, be between 0,1 to 0,9 times MPD. In practice it has been found that the vertical spacing is optimally in the range of 0,1 to 0,5 times MPD and preferably in the range of 0,3 to 0,5 times MPD.

DESCRIPTION OF PREFERRED EMBODIMENTS:

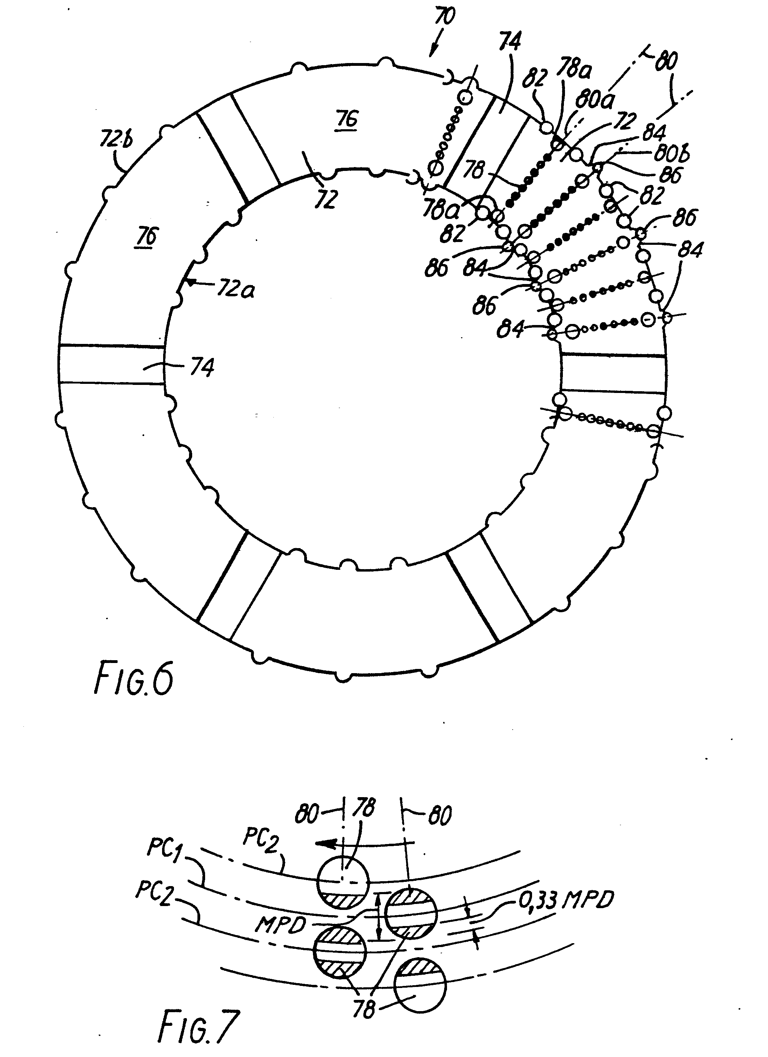

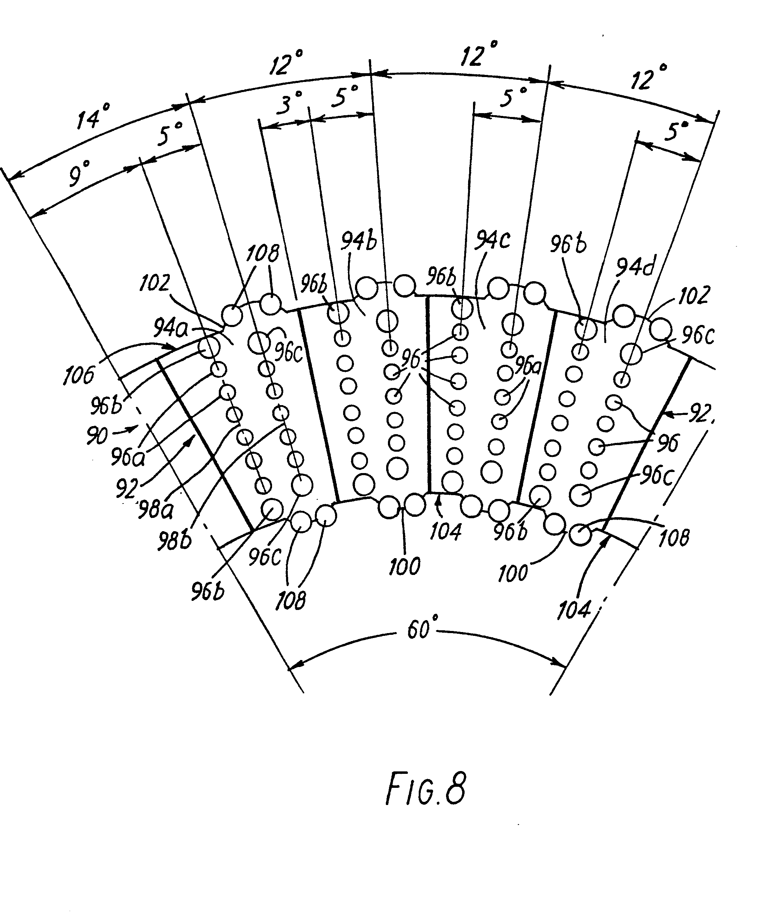

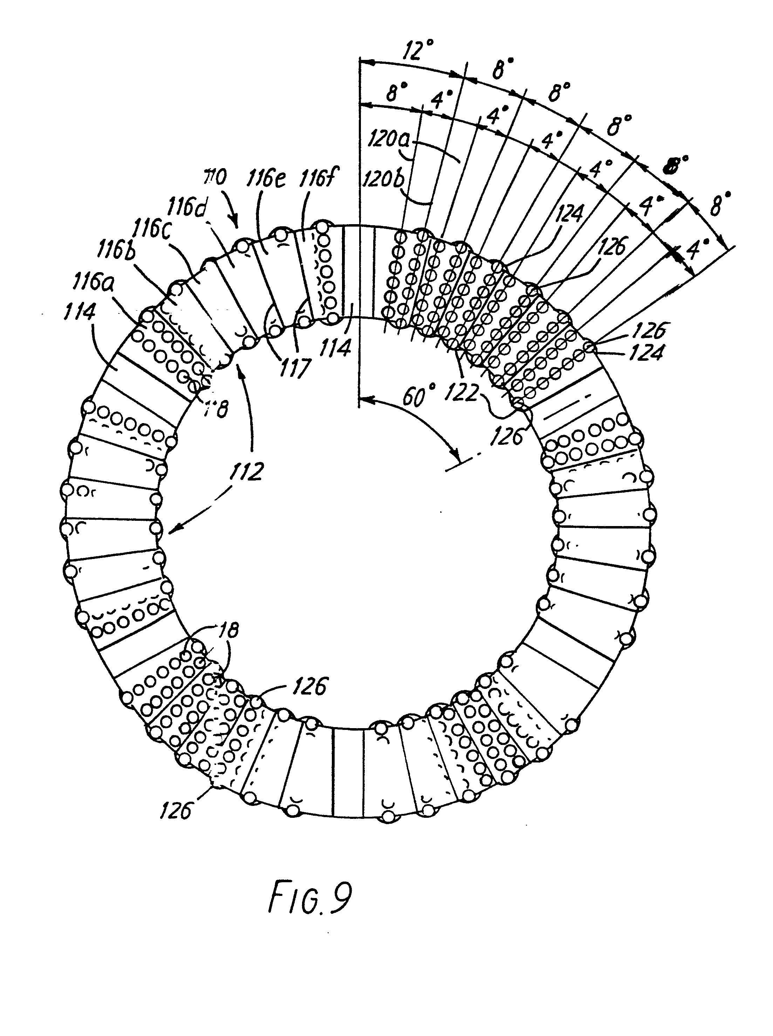

EMBODIMENT OF A MONO-LAYER CORING BIT (Figures 6 and 7)

Figure 1 shows a six waterway monolayer 1-deck coring bit crown 70 according to the invention of 9:8 face pattern. The coring bit 70 has six arcuate cutting devices 72 between adjacent waterways 74. Each cutting device 72 has a cutting face or deck 76 with surface set spaced synthetic diamond grit particles 78 (only one deck being shown with particles thereon) in alternate radial rows 80a and 80b with the rows 80a having nine particles in each row and the rows 80b having eight stones in each row. The particles 78 are of 25/30 stone size i.e. they lie in the range 25 to 30 US mesh.

22.

The rows of face stones or particles 80a and 80b are arranged at 8° intervals so that adjacent rows 80a (or 80b) are at 16° spacing, there being six rows 80 per segment. The first row on a segment 72 (regarded in the cutting direction) is a nine particle row 80a and the last, an eight particle row 80b. The particles are in a lateral overlapping disposition. The radially inner and outer arcuate corners 72a and 72b are set with relatively larger grit particles as gauge stones 82, there being a gauge stone 86 between adjacent rows and between each end row and the adjacent waterway 74.

Reference is now made to Figure 7 where the rows 80 are shown close together for the purpose of clarity. The stones 78 are spaced apart by about 40% the maximum particle diameter (MPD). The stones in one row lie on pitch circles PC 1 spaced midway between the pitch circles PC 2 on which lie the particles in adjacent rows. There is therefore an overlap (indicated by shaded lines on the particles) with the stone in an adjacent row and on an adjacent pitch circle PC 2 of about 33% MPD. This constitutes a laterally overlapping disposition of the particles. Consequently the entire width of the face of the work-surface being cut by the crown 70 will be cut by particles 80 in adjacent rows.

Splines 84 on the inner and outer cylindrical faces of the cutting devices 72 each have a longitudinal row of six particles 86. The splines 84 are located at the ends of the eight stone rows 80a.

23.

In all, there are three hundred and six face stones or particles 78, eighty four gauge stones 82 and four hundred and thirty two spline stones 86.

PREFERRED CORING BIT FACE PATTERN (Figure 8).

Figure 8 is a plan view of a detail of a preferred cutting device 90 for a coring bit, the detail being a 60° segment of the bit between waterways 92. The cutting device 90 is positive 4 deck multi-layer device of a, b, c, d design and 8:7 face pattern.

The decks 94 lie in equispaced transverse planes. Each deck 94 is a segment of an annulus subtending 12° at the centre of the bit. Each deck 94 has particles 96 set in its surface in spaced relationship in a pair of radial lines 98a and 98b at 5° to each other with line 98a set at 3° in a clockwise direction from the leading edge of the deck 94. Each line 98a has eight particles 96, the outermost particles 96b of which are larger than those particles 96a intermediate the ends, say 25/30 US mesh versus 30/35 US mesh.

Each line 98b has seven particles 96 arranged in lateral overlapping disposition with the particles 96 of each line 98a. The particles 96c at the ends of the seven particle lines 98b are larger than the particles 96 in lines 98b therebetween.

The outermost particles 96b and 96c are called "corner" stones.

24.

In practice, these corner stones 90 and 92 may be on radiussed corners of the cutting face.

Longitudinal splines 100 and 102 are provided on the inner and outer cylindrical surfaces 104 and 106 of the cutting device 90. These splines 100 and 102 are aligned with each seven stone line 98b. The particles 108 set in the tops of the splines 100 and 102 are larger than the other particles on the splines (not shown) and these protrude beyond the outer and inner diameters. These particles 108 are called "top spline stones". Because these top spline stones 108 determine the gauge of the cut they are also known in the art as "gauge stones" or "kickers" amongst other names colloquial to various parts of the world.

The vertical spacing between the decks 94 is selected to provide the required amount of vertical overlap of the particles on adjacent decks 94 and is conveniently 0,5 MPD. As discussed above this overlap is related to the matrix material and the tenacity with which it holds the cutting elements, the size of the cutting elements and the practical loads which can be applied by as well as the power capacity of the machine driving the coring bit.

MULTI LAYER CORING BIT (Figure 9)

Figure 9 shows a six waterway positive six deck multi-layer coring bit crown 110 according to the invention of 6:5 face pattern and an a, b, c, d, e, f design. The coring bit 110 has six arcuate cutting devices 112 between adjacent waterways 114.

25.

Each cutting device 112 has six decks 116 each lying in a transverse plane with radially extending vertical steps 117 therebetween. Each deck 116 has surface set spaced synthetic diamond grit particles 118 in two radial rows 120a and 120b with the rows 120a having six particles in each row and the rows 80b having five stones in each row. The particles 118 are of a maximum size of 25 US mesh.

The rows 120a and 120b of face stones or particles are arranged at 4° intervals so that adjacent rows 120a (or 120b) are at 8° spacing, there being two rows 120 per deck. The first row on a segment 112 (regarded in a clockwise direction) is a six particle row 120a. The particles are in a lateral overlapping disposition.

The stones 120 are spaced apart by about 40% the maximum particle diameter (MPD).

Splines 122 and 124 the inner and outer cylindrical faces of the cutting devices 112 each have a longitudinal row of six particles 126. The splines 122 and 124 are located at the ends of the five stone rows 120a.

In all, there are three hundred and ninety six face stones or particles 78, gauge 82 and four hundred and thirty two spline stones 126. The maximum face coverage of the particles at each layer comprises 12,5%.

26.

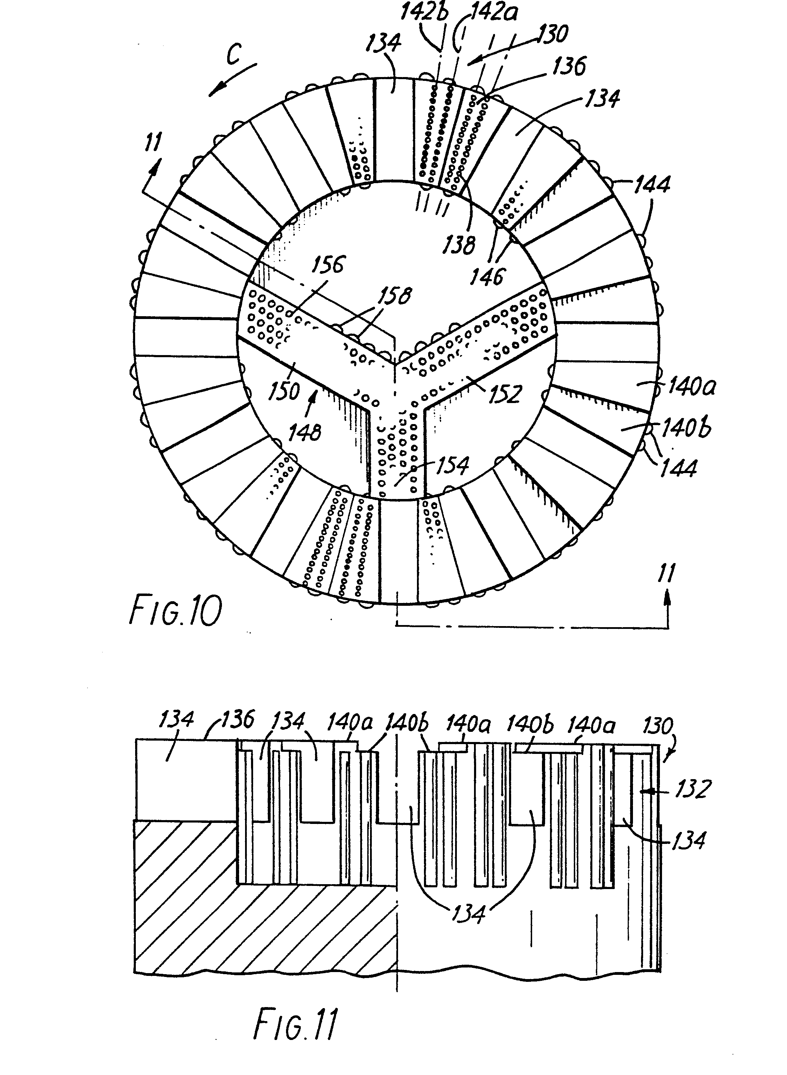

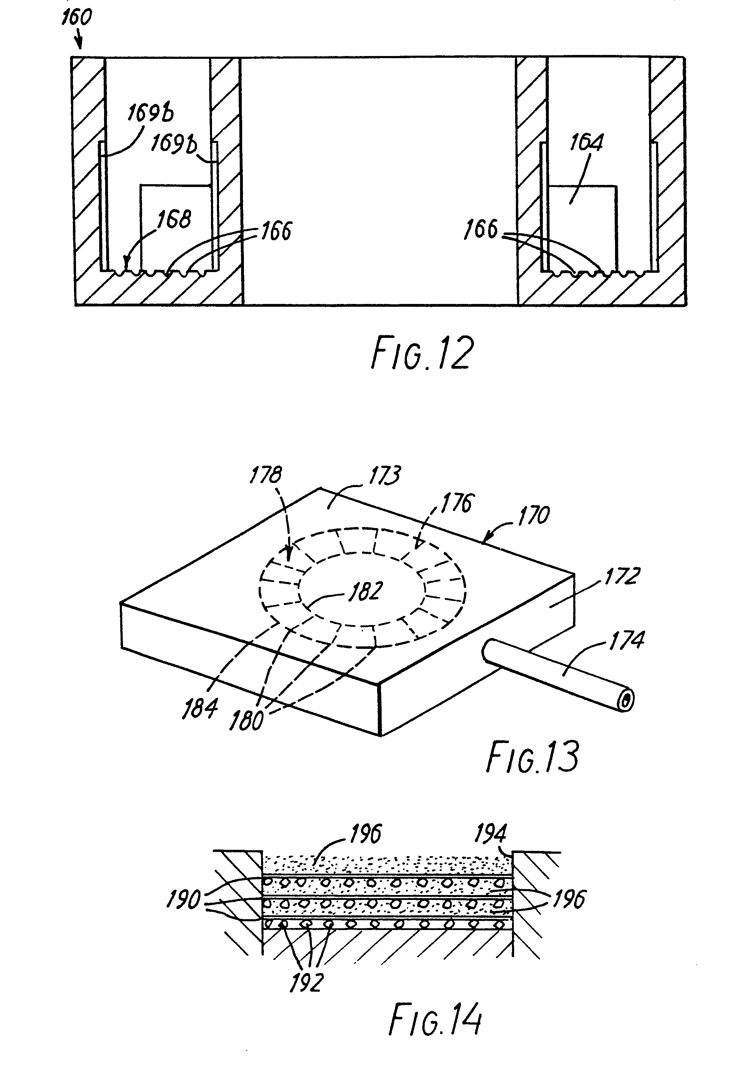

## A NON-CORING BIT (Figures 10 and 11)

A non-coring bit 130 of the invention has its front end 132 formed as a hollow cylinder with its annular front face divided by twelve waterways 134 to form twelve cutting devices 136. The cutting devices 136 are 2-deck multi-layer devices having a 14:15 face pattern and of an a, b design. The particles 138 are arranged in a pair of radial rows 142a and 142b on each deck 140 with the particles in adjacent rows being in a lateral overlapping disposition. The rows 142a contain fifteen particles and the rows 142b contain fourteen particles.

Two pairs of splines 144 are provided in the outer cylindrical faces and one pair of splines 146 on the inner cylindrical face of each cutting device 136 being located so that there is one pair of splines 144 and one spline 146 at the ends of sides of each deck 140.

A central portion 148 having three arms 150, 152 and 154 is located within the annular bit 140. The three arms 150, 152 and 154 are of different lengths and extend meet at obtuse angles. The upper surfaces of these arms lie in a the same transverse plane which is located slightly below the decks 140. These surfaces constitute mono-layer cutting devices and have four rows of particles set into them with the rows extending longitudinally of the arms and with the particles therein being in lateral overlapping dispositions. Vertical splines 158 are formed in the adjacent sides of the two longer arms 150 and 152 near their junction.

27.

In use, the annular cutting devices 136 make an annular cut in the working surface and the cutting devices 156 cut away the material left within the annular cut.

## METHOD OF SETTING.

For the coring bits described above, the particles may be set in a number of ways in the matrix as described below.

In a mono-layer construction, as shown in Figure 6, the particles may be set in the conventional manner using a suitable die 160 (see Figure -12) made of steel, carbon, "Nimonic" or the like, having an annular recess 162 that is complemental to the required final shape of the coring bit. Radially extending blocks 164 are inserted in the annular recess 162 to form the waterways. Indentations 166 each for receiving one particle are formed in the base 168 of the recess 132 in the required pattern. Longitudinally extending grooves 169a and 169b, to form the splines, are cut into the inner and outer walls of the die defining the recess 162.

A tacky adhesive is painted on to the die at the indentations 166 and grooves 169. Particles are positioned in the indentations and grooves and held in position by the adhesive. Thereafter the desired matrix material is packed into the recess and compressed and the matrix densified by hot pressing, sintering or infiltration as required and as well known in the art.

28.

For a multi-layer construction of the type shown in Figures 8 and 9, a die and method similar to that described above for a mono-layer is used. However in this event the base of the die is not planar but is formed with a number of segmental radially extending steps, each step landing being at a predetermined height above the preceeding landing to provide the required amount of vertical spacing for the decks.

A method of forming a many-layer device is to use the die and method described for a mono-layer construction. In this method an adhesive is used that will volatilise on densification of the matrix material. The face particles are positioned in the indentations 166 and spline particles are positioned in each longitudinal groove at the base of such grooves. The matrix material is selected such that after compression it holds its shape but is not fully hard. A layer of such material is placed in the die and compressed to form a rear matrix part. Thereafter the rear matrix part is removed, further particles are positioned in the die and a thin layer, of predetermined thickness, of matrix material is provided in the die. The rear matrix part is returned to the die and placed on this part. The whole is compressed with the new matrix material and particles. In this way a plurality of layers is built up. After all the layers have been built up, the unit thus formed is finally compressed and densified by hot pressing, sintering or infiltration as required and as well known in the art as required by the matrix material.

29.

## MECHANISED SETTING METHOD AND APPARATUS

Yet another method of setting relatively small particles of grit in a pre-determined pattern, bearing in mind that such particles may be 30 US mesh and smaller, involves using a vacuum device or scoop 170 as shown in Figure 13 of the drawings. This scoop 170 comprises a housing 172 defining a closed chamber, the interior of which is connected via a tube 174 to a source of negative pressure, i.e. partial vacuum (not shown). One wall 173 of the housing is formed with a plurality of holes 176 arranged in a desired pattern 178. In the embodiment shown, the pattern 178 comprises a plurality of radial lines 180 forming an annulus with an inner diameter 182 and an outer diameter 184. Such a pattern could for example correspond to the pattern of particles in a coring bit as shown in Figure 6.

The pattern of holes 178 is formed using a photographic etching technique as already known in the art. This technique involves drawing the desired pattern on a large scale, photographing the drawing, focussing a reduced image of the drawing on to a sensitized metal plate or a mask, developing the image and etching the holes chemically. In this way an accurate pattern of very fine holes is formed.

In use, the wall 173 of the scoop 170 is placed over a body of grit particles and vacuum is applied to suck particles into the holes 176. The wall 173 is then inspected to ensure

30.

that a particle is seated in each hole. An annular plastics carrier sheet coated with an adhesive is now applied to the wall and the particles bond thereto. The vacuum is now released and the carrier sheet with the particles adhering thereto is removed. The carrier sheet 190 with particles 192 adhered to it is then placed in a die 194 (see Figure 14).

For forming a many layer, construction, a predetermined thickness layer 196 of suitable matrix material is placed over the carrier sheet 190 in the die whereafter a further carrier sheet 190 is placed in the die. More matrix material 196 is then added and the material is compacted and densified by hot pressing, infiltration or sintering depending on the nature of matrix material. During the densification the carrier sheets 190 are vapourised.

When constructing a mono-layer device, only one carrier sheet 190 with adhered particles is used. With many layers, eg as shown in Figure 4b, the annular carrier sheet 190 is placed in the die in such manner that the radial lines or particles in successive layers are staggered throughout.

The method and apparatus described above with reference to Figures 13 and 14 can also be applied to setting the particles as shown in Figure 6 where as described certain of the particles are larger than the others. For this purpose the perforated wall 173 is formed with holes 176 of two (or more as desired) sizes of holes in the required array. In use the housing is first placed with the wall 173 in contact with the surface of a body of discrete larger size particles, i.e. particles 96b, 96c in Figure 8) and vacuum applied to the scoop 170. Particles will thereby be partially drawn into and seated in the larger holes. The degree of vacuum applied must be sufficient to hold the larger particles in the larger holes but not sufficient to support the larger particles in the smaller holes. Accordingly the larger particles will not be retained in the smaller holes. The vacuum is maintained and the scoop 170 is moved and the wall 173 is placed in contact with a body of the smaller particles. These latter are now seated on the appropriate holes. All the particles are then adhered and transferred to a carrier sheet as described above.

Alternatively, one may use two separate scoops, one with holes for locating wthe corner stones and the other with smaller stones for the smaller face stones. In a further modification, there may be a single scoop with an internal slide which selectively blanks off the larger holes or the smaller holes. These scoops are used with alternative bodies of large and small particles.

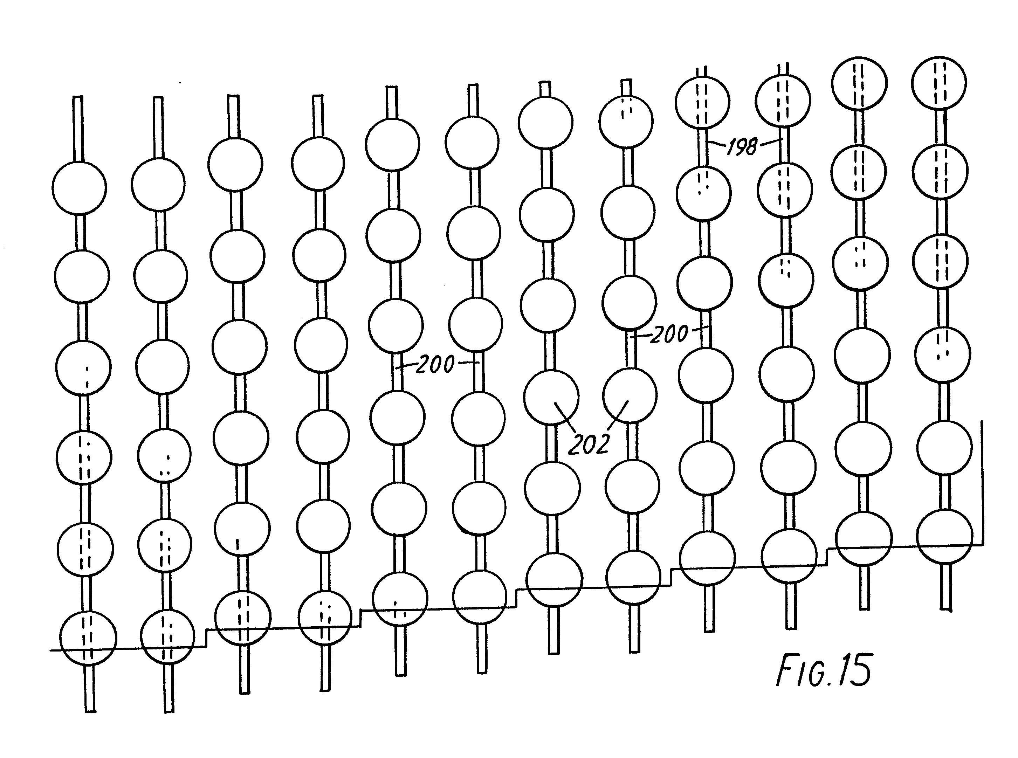

Instead of using an adhesively coated plastic carrier sheet, one can use bronze shims 198 as shown in Figure 15. These shims 200 carrying particles 202 which can be as narrow as 0,003 inches thick are more rigid than the plastic sheets and can be used parallel to the decks for mono-layers or standing vertically as shown for forming a many layer device. As illustrated in Figure 15 there is shown an arrangement for producing á multi/many layer device similar to that illustrated in Figure 9. On densification of the matrix material the bronze shims will form part of the finished matrix itself. The shims 200 may be used for monolayer and many layer cutting devices.

SPECIFIC EXAMPLES.

Details of a number of specific embodiments of coring bit crowns are set out in the Table 1. All of these crowns were of a type referred to as AXT in the art and having an outside diameter OD of 47,63 mm and an inside diameter of 32,54 mm. The total face area of such AXT crowns is 949,91 sq.mm. Also in all the bits, the face particles are cubo-octohedral SDA 100 synthetic diamond grit.

TABLE 1

| Crown | | | Face Particles | | | | | | Spline stones | | Approx carats (face & spline) | Matrix | Performance (Metres drilled in Norite) | Metres drilled per carat (Norite) |
|---|---|---|---|---|---|---|---|---|---|---|---|---|---|---|
| No | No W'ways | Type | Size US mesh | Patt-ern | Total No | MFCP | Radial Overlap | Corner Stones | Size US Mesh | Total No | | | | |
| 1 | 6 | Mono-layer surface set | 30/40 | 9:8 | 244 | 8,84 | 1/3 | Yes | 30/40 | 480 | 1,0 | Hard | 14,0 m | 14,0 |
| 2 | 6 | do. | 30/40 | 10:9 | | -10,0 | 1/3 | No | n/a | None | 0,4 | 80/20 bronze | 2,0 m | 5,4 |
| 3 | 4 | do. | 30/40 | 10:9 | | -10,0 | 1/3 | Yes | n/a | None | 0,5 | 80/20 bronze | 6,0 m | 12,8 |
| 4 | 6 | 2 deck many layer | 30/35 | 9:8 | 244 face | 16 layer 1 29 t'l | 1/3 | Yes | 30/40 | 480 | 1,0 | Hard | 14,0 m | 14,0 |
| 5 | 6 | Mono-layer surface set | 30/35 | 9:8 | 258 | 16,35 | 1/3 | Yes | 20/30 | 384 | 1,8 | Hard | 27,0 m 12,0 m Q | 14,8 |
| 6 | 6 | 4 deck Multi-layer | 30/35 | 7:8 | 114* | 2,97 | 1/3 | Yes | 30/35 | 384 | 2,1 | Hard | 40,0 m 22,0 m | 19,5 |
| 7 | 6 | 3 deck Multi-layer | 25/30 | 7:6 | 204* | 12,7 | 1/3 | Yes | 25/30 | 384 | 2.6 | Hard | 65,0 m 33,4 m Q 32,5 m Q | 24,6 |
| 8 | 4 | 3 deck Multi-layer | 25/30 | 7:6:7 | 176 | 10,5 | 1/3 | Yes | 25/30 | 384 | 3,0 | Hard | 103,5 m 95,8 m | 32,8 |

* Includes Top Spline Stones
Q means tested in Quartzite.

34.

For comparison purposes it is pointed out that the best results that we have obtained to date in the laboratory with an impregnated diamond bit has been using an 80/20 bronze crown containing 5,3 carats SDA synthetic diamond grit and 1 carat 44 spc gage stones (giving a total of 6,3 carats). This drilled 85 metres in norite, i.e. 13,5 metres per carat. In practice, a good life to achieve with this such a bit/rock combination would be about 50 metres i.e. 7,9 metres per carat. Using a wholestone bit in norite, one could expect to drill approximately 8 metres for the use of 1 carat diamond (after salvage).

TESTING PARAMETERS

These crowns were test drilled either in the laboratory in Norite or underground at Vaal Reefs mine in rock using the constant thrust, i.e. hydraulic machines or constant penetration machines at various r.p.m. For comparison commercially available crowns of surface set whole stone or impregnated type were also drilled. The tests were by no means exhaustive or necessarily truly comparative as the object of the tests was to see if the crowns made according to embodiments of the invention would work at all and, if so, as predicted.

OBSERVATIONS ON TESTS CONDUCTED ON EXAMPLE CROWNS:

Some of the most striking results were as follows :-

35.

1) For examples of crowns of the invention that were of the same or substantially the same design, the drilling results showed a high degree of repeatability and similarity of performance taking into account specific differences in the designs. This repeatability was not experienced with conventional or commercially available surface set or impregnated crowns.

(2) The loads required or evident for the crowns of the invention were much very lower than those for whole stone surface set crowns and lower than for impregnated crowns.—

(3) The cost of the diamonds per metre drilled with coring bits of the invention having corner stones was very much less than the costs for conventional crowns.

(4) The matrix wear was very small even though the protrusion of the diamonds was less than 250 microns.

(5) Multi-layer crowns of the invention were able to drill for considerable distances indicating that crowns could be built up with very many layers for wire line drilling. Gauge was maintained for relatively long distances.

(6) In some tests where drilling stopped due to loads or torques that were too high, the crowns of the invention evidenced pull out or break away of stones in circles predominantly towards the outer radius of the bit. For this reason the reinforcement of the face with larger or more stones towards the outer corner thereof appears to be relevant.

(7) With crown 6 (4 deck) there was a relatively smooth change in load and torque in the transition between layers. However, with crowns of the crown 4 type there was a considerable increase in load (at constant penetration) when the second layer stones started cutting. Since the maximum face coverage percentage for the crown 7 design was much lower than for the crown 4 design, this suggests that the "effective" maximum face coverage percentage must be maintained below the limits given in the claims otherwise the capacity of the driving machine may be exceeded.

## THEORY.

At present "diamond" drilling of rock is more of an art than a science and there are many theories, some of which are contradictory, describing the drilling mechanism. This specification does not intend to propose a new theory. However what does emerge from the tests done to date is that a large number of smaller particles drill better than fewer large particles. Also that for the crown to do any drilling at all a certain minimum load per particle must be present. A further factor is that the load per particle should not be too high otherwise the particle themselves will fracture. Seemingly the pressure, i.e. force per unit area exerted by each particle must be related to the compressive or fracture strength of the rock being drilled. For this reason it is presently believed that there must be a balance or relationship between particle size and maximum face area coverage percentage so as to be able to drill.

37.

For the reason given above and from observation it is believed in general that the MFCP must be in the range of 1% to 40% with the particle size being in the range -25 to +40 US mesh. This covers the range of tools to which this invention applies. Particular tools will have their own ranges eg grinding, milling, polishing sawing etc. For coring bits to be used in rock it is believed the MFCP should preferably be in the range of 2% to 25%, most preferably in the range of 2% to 18% for grit in the range 25 to 40 US mesh to obtain efficient drilling rates, reasonable tool cost and long life for the tool.

VARIATIONS.

The invention is not limited to the precise constructional details hereinbefore described and illustrated and many modifications may be made without departing from the spirit and scope of the invention. For example instead of radial rows of cutting elements as shown, spiral rows or chevron lines may be used. Any convenient number of layers may be used and the arrangement of layers may be varied as desired. Also the grit may be orientated. The grit particles may be any suitable grit such as synthetic diamond, cubic boron nitride, natural stone diamond or processed natural diamond material. Furthermore the matrix material may be varied as required eg it may be 80/20 bronze or 90/10 bronze or other bronze, brass, copper, tungsten or tungsten carbide.

38.

<u>Claims</u>:

1. A cutting device including cutting elements set in matrix material, having a cutting face and having an intended cutting direction across the face, the cutting elements being arranged spaced apart from one another along a plurality of lines transverse to the cutting direction with the lines extending across the width of the cutting face and with the lines being spaced from one another along the cutting direction, the cutting elements of the lines being in laterally overlapping dispositions along the cutting direction, and the cutting elements having a maximum face coverage percentage of 40% and a maximum size of 25 US mesh.

2. A cutting device as claimed in claim 1 wherein the maximum face coverage percentage is between 25% and 1%

3. A cutting device as claimed in claim 2 wherein the maximum face coverage percentage is between 20% and 2%.

4. A cutting device as claimed in claim 3 wherein the maximum face coverage percentage is between 2.5% and 18%.

5. A cutting device as claimed in claim 1 wherein the cutting element size is in the range 25 to 40 US mesh.

6. A cutting device as claimed in claim 1 wherein the lateral overlap of cutting elements is between 0.1 and 0.9 times the maximum particle diameter (MPD).

7.  A cutting device as claimed in claim 6 wherein the lateral
    overlap of cutting elements is between 0.3 and 0.35 times MPD.

8.  A cutting device as claimed in claim 1 wherein the lines in which
    the cutting elements are arranged are straight lines.

9.  A cutting device as claimed in claim 8 wherein the lines in which
    the cutting elements are arranged are substantially perpendicular
    to the cutting direction.

10. A cutting device as claimed in claim 9 which is arcuate in shape
    wherein the lines in which the cutting elements are arranged are
    radial of the axis of the device.

11. A cutting device including cutting elements set in matrix material, having a cutting face and having a cutting direction, the
    cutting elements being arranged spaced apart from one another
    along lines transverse to the cutting direction with the lines
    extending across the width of the cutting face and with the lines
    being spaced from one another along the cutting direction, the
    cutting elements along the cutting direction of the lines being
    in laterally overlapping dispositions and the cutting elements
    being arranged in a three dimensional array in the matrix material with at least some of the lines being in layers parallel to
    and spaced from the cutting face and with the cutting elements in
    each layer being in laterally overlapping dispositions across the
    width of the cutting face.

12. A cutting device as claimed in claim 11 wherein the cutting elements in one layer overlap the cutting elements in an adjacent layer, with the amount of overlap being such that in the transition, in use, between layers the maximum face coverage percentage (MFCP) is less than 40% for the total number of cutting elements in the adjacent layers.

13. A cutting device as claimed in claim 12 wherein the amount of vertical overlap is between 30% and 65% MPD.

14. A cutting device including cutting elements set in matrix material, having a cutting face and having a cutting direction, the cutting elements being arranged spaced apart from one another along lines transverse to the cutting direction with the lines extending across the width of the cutting face and with the lines being spaced from one another along the cutting direction, the cutting elements along the cutting direction of the lines being in laterally overlapping dispositions and the cutting face comprising a plurality of parallel decks which extend transversely to the cutting direction and on each of which is set at least one pair of cutting elements.

15. A cutting tool including at least one cutting device as claimed in claim 1.

16. A cutting tool including at least one cutting device as claimed in claim 11.

17. A cutting tool including at least one cutting device as claimed in claim 14.

18. A cutting tool as claimed in claim 15 in the form of a rotary bit the cutting face of which has a corner on at least one side thereof wherein the said corner is reinforced with additional lateral cutting elements.

19. A cutting tool as claimed in claim 18 wherein the said lateral cutting elements are slightly larger than the cutting elements on the cutting face intermediate the lateral edges.

20. A method of making a cutting device comprising

   (a) placing a scoop having a surface formed with a desired array of holes on the surface of a body of discrete cutting elements;

   (b) applying a vacuum to the interior of the housing to cause cutting elements to be drawn partially into each of the holes;

   (c) removing the housing from the body of cutting elements;

   (d) placing carrier means having a tacky adhesive on at least one side thereof in contact with the cutting elements to cause the cutting elements thereto;

   (e) removing the vacuum;

   (f) placing the carrier means with adhered cutting elements in a die;

   (g) pouring matrix material into the die; and

   (h) hardening the matrix material.

42.

21. A method as claimed in claim 20 wherein a plurality of carrier means each with adhered cutting elements is formed, wherein the carrier means are stacked in a die with a predetermined quantity of matrix material being inserted between adjacent carrier sheets, and the body so formed is then hardened.

22. A method as claimed in claim 20 wherein the carrier means comprises a material that volatilises when the matrix is densified.

23. A method as claimed in claim 20 wherein the carrier means comprises a material that that will form part of the matrix itself after densification.

24. A hollow scoop for use in the method claimed in claim 20 comprising a surface consisting of a plate formed with an array of holes therein.

25. A scoop as claimed in claim 24 wherein the array of holes is formed by a photographic etching processes.

FIG.1

FIG.2

0086086

FIG.3a

FIG.3b

FIG.4a

FIG.4b

FIG. 5a

FIG. 5b

FIG. 5c

FIG. 5d

FIG.6

FIG.7

FIG.8

FIG.9

FIG.10

FIG.11

160

169b

169b

168

166

164

166

**FIG.12**

178

173

176

170

182

172

174

184

180

**FIG.13**

196

194

190

196

192

**FIG.14**

FIG.15